(19) Europäisches Patentamt

European Patent Office

Office européen des brevets

(11) EP 0 877 357 A2

## (12) EUROPEAN PATENT APPLICATION

(43) Date of publication:
11.11.1998 Bulletin 1998/46

(51) Int. Cl.⁶: **G11B 5/64**

(21) Application number: 98107884.3

(22) Date of filing: 29.04.1998

(84) Designated Contracting States:
AT BE CH CY DE DK ES FI FR GB GR IE IT LI LU
MC NL PT SE
Designated Extension States:
AL LT LV MK RO SI

(30) Priority: 08.05.1997 JP 118307/97

(71) Applicant: SONY CORPORATION
Tokyo (JP)

(72) Inventor: **Arisaka, Yuichi**
**Shinagawa-ku, Tokyo (JP)**

(74) Representative:
**Müller, Frithjof E., Dipl.-Ing.**
**Patentanwälte**
**MÜLLER & HOFFMANN,**
**Innere Wiener Strasse 17**
**81667 München (DE)**

### (54) Magnetic recording medium

(57) The present invention provides a magnetic recording medium in which a mechanical dimension change caused by a heat history in a production procedure is minimized so as to increase a mechanical characteristic, and a storage characteristic under a severe environment is increased.

In a magnetic recording medium having a metal layer 2 made from a metal magnetic thin film and formed on one surface of a non-magnetic support member 1, a metal anticorrosive layer 3 is formed on the opposite surface of the non-magnetic support member 1 not having the magnetic layer 2.

FIG.1

**Description**

BACKGROUND OF THE INVENTION

Field of the Invention

The present invention relates to a magnetic recording medium of the so-called metal magnetic thin film type having a metal magnetic thin film as a magnetic layer formed on a non-magnetic support member.

Description of the Prior Art

Recently, in the field of a video tape recorder and the like, a high density recording is strongly desired for increasing the quality of the picture. As a magnetic recording medium to answer this request, it has been proposed to provide a magnetic recording medium of a so-called metal magnetic thin film type in which a ferromagnetic material made from a metal or an alloy such as Co-Ni is directly applied onto a non-magnetic support member by way of plating or vacuum film formation technique.

This magnetic recording medium of the metal magnetic thin film type has excellent coercive force, ?, and an excellent electromagnetic conversion characteristic as well as has various merits that the recording demagnetization and the thickness loss during reproduction are significantly small because the magnetic layer can be formed as a thin film and that the magnetic material filling density can be increased because there is no need of mixing in the magnetic layer a binder and the like which is a non-magnetic material.

However, in the magnetic recording medium of the tape-shaped metal thin film type, the ferromagnetic metal material used in the magnetic layer has a thermal expansion coefficient which is different from that of a resin normally used in the base material, and a so-called cupping and curling are caused by the heat history generated in the production process of the deposition tape. If the cupping and curling exceed a certain limit, there will arise various problems. When used in a video tape recorder, the contact between the tape and the entrance and the exit is deteriorated and interference is caused between the tape wound up on a drum and a head protruding from the drum, causing a damage on a tape edge, i.e., a so-called head knocking. Consequently, it is necessary that the surface of a tape be flat and smooth.

In order to answer this request, there has been proposed a so-called hot roll method in which as one step in a tape production procedure, a heat of several tens to several hundreds centigrade degrees is intentionally applied and pressure applied during heat application is adjusted so as to produce a tape in a state without cupping and curling.

Although the method which intentionally applies a heat history enables to maintain the cupping and curing at a level not causing a problem at the moment of shipping or several years after shipping, the cupping and curling reaches a level causing a problem for a longer period of storage.

Furthermore, the aforementioned ferromagnetic metal material normally has a high chemical activity and is easily oxidized during storage, which causes anxiety for storing the tape as a data storage medium under a severe environment for a long period of time.

As a countermeasure for this, various methods have been proposed such as a method for forming an anticorrosive layer of an organic material on the magnetic layer surface or a method for forming a metal anticorrosive layer. Moreover, there have been also proposed a method for processing a tape edge face and a method for using a laser for cutting the tape in order to prevent generation of corrosion. It has been confirmed that these methods are effective even when the tape is in an exposed state. However, the aforementioned technique does not take consideration on increasing the characteristics of the tape as a data storage medium when it is stored under a severe environment for a long period of time.

SUMMARY OF THE INVENTION

It is therefore an object of the present invention to provide a magnetic recording medium which has an improved mechanical characteristic obtained by minimizing the mechanical dimension change caused by a heat history in the production procedure and which minimizes a chemical change caused in a non-magnetic support member, so as to improve the storage stability under a severe environment.

The magnetic recording medium according to the present invention is a magnetic recording medium including a magnetic layer made from a metal magnetic thin film formed on one surface of a non-magnetic support member wherein a metal anticorrosive layer is formed on the opposite surface of the non-magnetic support member.

Because the magnetic recording medium according invention has a metal anticorrosive layer on the opposite side of the non-magnetic support medium not having the magnetic layer, a mechanical dimension change will not be easily caused by a heat history during a production procedure. Moreover, the metal anticorrosive layer is formed from a metal selected as having a high barrier effect with a lo humidity and gas transparency and its thickness is selected to be an appropriate value. This enables to increase the mechanical characteristic as well as suppress chemical change such as precipitation of a low molecule component from the non-magnetic support member caused by a heat generated during the production procedure, thus enabling to significantly increase the storage characteristic in a severe environment.

Here, the aforementioned metal anticorrosive layer is preferably formed to have a thickness of 0.01 μm to 0.7 μm, so as to exhibit the aforementioned effects.

Furthermore, it is preferable that the aforementioned metal anticorrosive layer contain at least one of copper and nickel, so as to improve the aforementioned effect, especially to improve the storage characteristic.

Moreover, it is preferable that the aforementioned metal anticorrosive layer be formed between the non-magnetic support member and a backing layer, so as to prevent charging and to improve a medium running property.

BRIEF DESCRIPTION OF THE DRAWINGS

Fig. 1 is a cross sectional view showing a magnetic recording medium according to the present invention.

Fig. 2 a schematic view of a plasma apparatus used for film formation of a metal anticorrosive layer of the magnetic recording medium according to the present invention.

Fig. 3 is a plot showing the cupping amount increasing conditions.

Fig. 4 is a schematic view of an apparatus for measuring a cupping amount.

Fig. 5 is a plot showing the relationship between a storage time and a dimensional change and the relationship with the metal anticorrosive layer thickness.

Fig. 6 is a plot showing the relationship between a storage time and a residual magnetic flux density deterioration and the relationship with the metal anticorrosive thickness.

Fig. 7 is a plot showing the relationship between the metal anticorrosive layer thickness and the residual magnetic flux density deterioration.

Fig. 8 is a plot showing the relationship between a metal anticorrosive layer thickness and a dimensional change.

Fig. 9 is a plot showing the relationship between a metal anticorrosive layer thickness and a residual magnetic flux density deterioration.

Fig. 10 is a plot showing the relationship between a metal anticorrosive layer thickness and a dimensional change.

Fig. 11 is a plot showing the relationship between a metal anticorrosive layer thickness and a residual magnetic flux density deterioration.

Fig. 12 is a plot showing the relationship between a metal anticorrosive layer thickness and a dimensional change.

DETAILED DESCRIPTION OF PREFERRED EMBODIMENTS

Hereinafter, detailed description will be given on a magnetic recording medium according to the present invention.

The magnetic recording medium according to the present invention is a magnetic recording medium having a magnetic layer of a metal magnetic thin film formed on one surface of a non-magnetic support member having the opposite surface on which a metal anticorrosive layer is formed.

As this magnetic recording medium has a metal anticorrosive layer formed on a surface of a non-magnetic support member not having a magnetic layer, the heat history obtained in the production procedure will not easily cause a mechanical dimensional change. Moreover, this magnetic recording medium selects a metal for the metal anticorrosive layer which has a low humidity and gas transparency and has a high barrier effect, and defines the thickness of the metal anticorrosive layer which enables not only to obtain a superior mechanical characteristic but also to suppress a chemical change such as precipitation of a lower molecule component from the non-magnetic support member due to heat generated during the production, thus significantly increasing the storage characteristic under a severe environment.

Here, the aforementioned metal anticorrosive layer preferably has a thickness of 0.01 μm to 0.7 μm. If the thickness is smaller than 0.01 μm, the aforementioned effect cannot be obtained. Moreover, if the thickness of the aforementioned metal anticorrosive layer exceeds 0.7 μm, the mechanical dimensional change is increased, which is not preferable.

Moreover, as the aforementioned metal anticorrosive layer, it is recommended to select a metal having a low humidity and gas transparency and a high barrier effect. By selecting such a metal, it is possible to remarkably increase the storage characteristic under a severe environment.

The metal anticorrosive layer may be made preferably, for example, from a copper-nickel alloy or an alloy containing at least either of copper or nickel. It is also possible to form a multi-layered film.

Thus, the aforementioned metal anticorrosive layer can improve not only the mechanical characteristic but also the storage characteristic if the metal material and thickness are carefully selected.

The metal anticorrosive layer may be formed by way of a film formation method by a vacuum deposition, a physical deposition method (PVD) such as sputtering, chemical vapor phase epitaxy, and the like. Moreover, formation of the metal anticorrosive layer may be carried out either before or after the formation of the magnetic layer.

For the aforementioned non-magnetic support member, it is possible to use a conventional known material includ-

3

ing a macromolecular material such as polyester, polyolefin, cellulose derivative, vinyl resin, polyimide, polyamide, polycarbonate, and the like.

For the aforementioned metal magnetic thin film, it is possible to form a metal magnetic film of in-surface magnetization recording from a metal such as Fe, Co, Ni, or an alloy such as a Co-Ni alloy, Co-Ni-Pt alloy, Fe-Co-Ni alloy, Fe-Ni-B alloy, Fe-Co-B alloy, and the like; or a magnetic thin film of vertical magnetization recording from a Co-Cr alloy thin film, a Co-O thin film, and the like.

For the magnetic thin film of in-surface magnetization recording, it is possible to form in advance on the non-magnetic support member a backing film from a non-magnetic material having a low melting point such as Bi, Sb, Pb, Sn, Ga, In, Si, Ti or the like, after which a metal magnetic material is deposited or sputtered in a vertical direction. This makes to disperse the aforementioned non-magnetic material having a low melting point in the metal magnetic thin film, canceling the orientation to assure the in-surface isotropic property as well as to increase the coercive force.

It should be noted that configuration of the magnetic recording medium according to the present invention is not limited to a particular one. It is also possible to provide a top coat layer on the aforementioned metal magnetic thin film in order to increase the inorganic durability. This top coat layer is not limited to a particular material and it can be made from, for example, C, $Al_2O_3$, Ti-N, Mo-C, Cr-C, SiO, $SiO_2$, Si-N, and the like.

Moreover, the aforementioned metal anticorrosive layer may be covered by a backing coat layer with dispersion of a carbon fine powder for prevention of charging, improvement of medium running property, and preferable conductivity as well as an inorganic pigment for controlling the surface roughness.

As the powder used in the backing coat layer, besides carbon black, there can be exemplified benzoguqnamine resin powder, melamine resin powder, epoxy resin powder, polyethylene terephthalate powder, phthalocyanine pigment powder, titanium oxide powder, silicon dioxide powder, molybdenum disulfide powder, tungsten disulfide powder, hydrous ferric oxide powder, magnesium silicate powder, calcium carbonate powder, aluminium silicate powder, barium sulfate powder, clay powder, an the like.

[Examples]

Magnetic tape samples were actually prepared with formation of a metal anticorrosive layer and mechanical characteristics and storage characteristics were checked according to the thickness and composition of the metal anticorrosive layer.

The magnetic tape samples used in this check were produced according to a production procedure as follows.

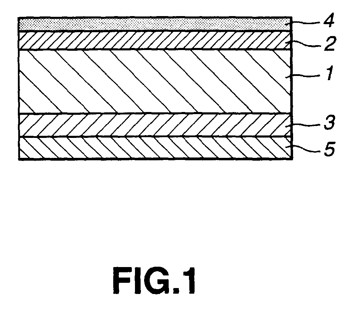

That is, firstly, as shown in Fig. 1, on one surface of a non-magnetic support member made from a macromolecular film 1 having a thickness of 0.6 $\mu$m was formed a metal magnetic thin film 2 containing Co as a main component with a thickness of 0.18 $\mu$m.

Next, on the opposite surface of the macromolecular film 1 not having the metal magnetic thin film 2, a metal anticorrosive layer 3 was formed by sputtering from a Cu-Ni alloy having an atomic ratio of Cu and Ni as 9 : 1 (hereinafter, referred to as Cu90Ni10 alloy).

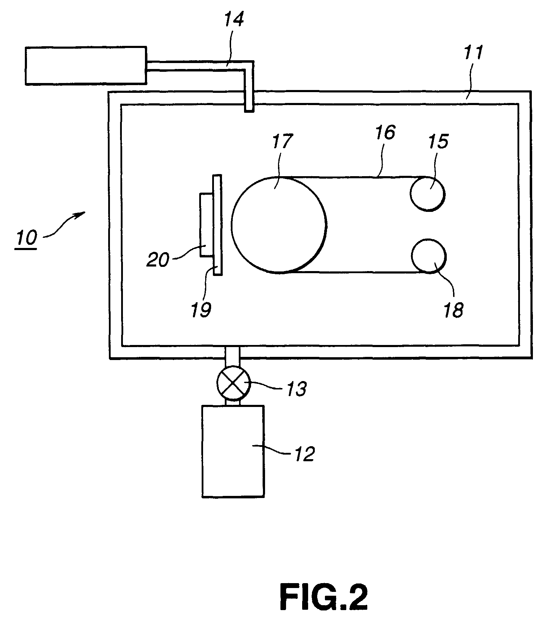

More specifically, a magnetron sputter apparatus 10 shown in Fig. 2 was covered externally with a chamber 11 and the pressure in the chamber 11 was firstly reduced to $10^{-4}$ Pa by using a vacuum pump 12. After this, a valve 13 for air discharge to the side of the vacuum pump 12 was closed by 10 degrees from the full open state, and an Ar gas was introduced from an Ar gas introduction pipe 14 so as to set the vacuum degree to 0.8 Pa. Next, a tape 16 in a state having the metal magnetic thin film 2 deposited is set on a lead-out roll 15 so as to travel around the circumference of a cooling can 17 cooled down to -40°C, reaching a lead-in roll 18. Voltage of 3000 V was applied to an electrode 19 and a target 20 made from the Ci90Ni10 alloy arranged to oppose the aforementioned cooling can 17 at a distance of 45 mm, so as to maintain a flow of 4A current. This formed a metal anticorrosive layer 3 from the Cu90Ni10 alloy on the macromolecular film 1 of the tape 16. It should be noted that the thickness of the metal anticorrosive layer 3 (film formation time) was set to various values in experiments described later.

Next, a solution containing 0.1 weight % of an organic anticorrosive agent was applied by using a coating apparatus using a gravure roll and dried by using a dryer at 100°C. After this, as a lubricant, a solution containing as a main content 0.5 weight % of an organic material of perfluoropolyether derivative was applied similarly by using a gravure roll and dried, so as to form the top coat layer 4.

Next, the aforementioned metal anticorrosive layer was covered by a macromolecular backing coat layer 5 of 0.5 $\mu$m thickness was formed from carbon as a main content and a vinyl chloride binder as a hardening agent.

Thus, we obtained the tape 16, as shown in Fig. 1, which has the backing coat layer 5, the metal anticorrosive layer 3, the macromolecular film 1, the metal magnetic thin film 2, and the top coat layer 4 layered in this order. This tape 16 was cut into a width of 8 mm to obtain magnetic tape samples. Note that we also prepared comparative samples obtained without forming the metal anticorrosive layer in the aforementioned production procedure.

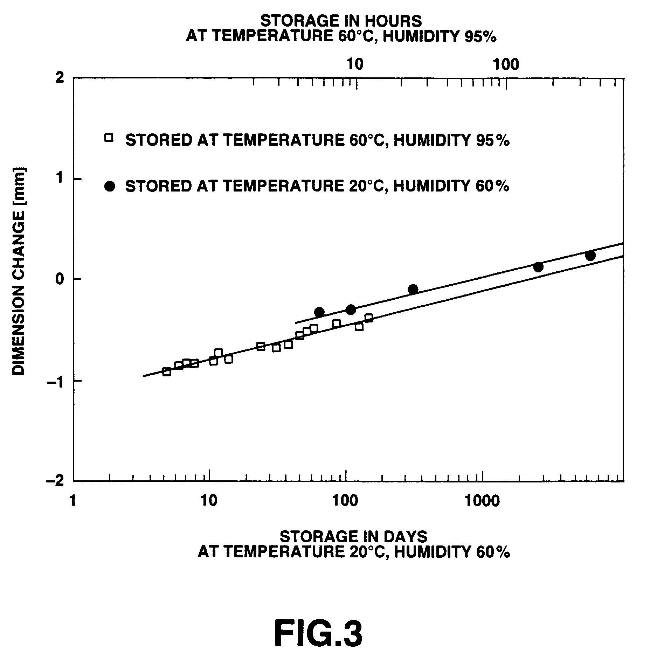

In order to check the mechanical dimension change of the metal anticorrosive layer, and an environment acceleration condition was set as follows. That is, the temperature was set to 60°C and the humidity was set to 95%. As shown in Fig. 3, the tape stored in this condition for 144 hours showed a dimension change which corresponds to a storage for 6.5 years in the condition defined by the temperature of 20°C and humidity of 60%, and storage in the accelerated condition for 226 hours was equivalent to a storage of 15 years in the non-accelerated condition.

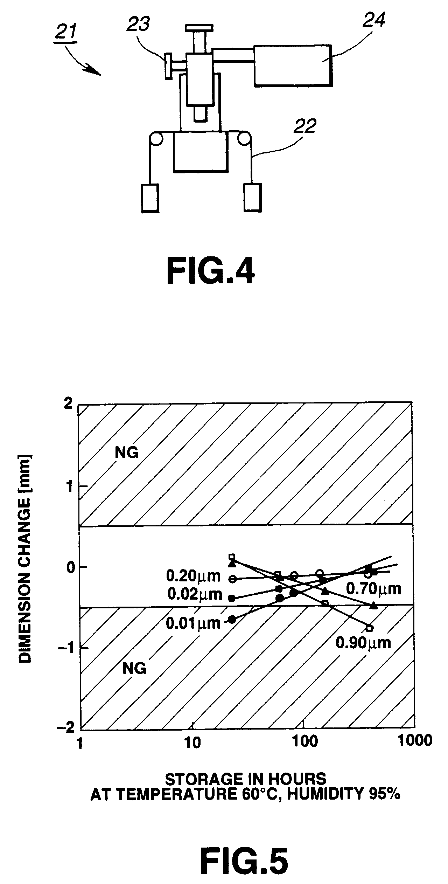

Moreover, the mechanical dimension change was determined with the index of the cupping amount change by using a cupping measurement apparatus 21 shown in Fig. 4. That is, an optical microscope 23 was focused onto a center portion and an edge portion of a magnetic tape sample 22 with 100 magnification. After a predetermined time of storage elapsed. a difference in the height of the center portion and the edge portion was read by using a micrometer 24 interlocked with a vertical stage of the optical microscope 23. A positive and negative cupping is defined as follows. When the tape is placed with the magnetic layer side upward, a convex state to the magnetic layer side is a negative cupping and a concave state to the magnetic layer side is a positive cupping.

Hereinafter, Experiments 1 to 8 were carried out by using the magnetic tape samples and the comparative samples prepared as described above.

⟨Experiment 1⟩

Experiment 1 used magnetic tape samples having a thickness of the metal anticorrosive layer: 0.01 μm, 0.02 μm, 0.20 μm, 0,70 μm, and 0.90 μm, so as to check the relationship between the storage time and the dimension change (cupping amount) depending on the different thickness values of the metal anticorrosive layer. The check results are shown in Fig. 5.

Fig. 5 shows the tendency that as the thickness of the metal anticorrosive layer increases, the dimension change (cupping amount) after a predetermined period of time is decreased, but that after the thickness reaches 0.70 μm, the negative cupping in the reverse direction is increased, which causes a practical trouble. Note that in the figure, the range causing practical trouble is indicated by slanting lines.

In the case when the metal anticorrosive layer is made from the Cu90Ni10 alloy and stored for 336 hours, the optimal result can be obtained when the thickness is 0.20 μm, and if the thickness exceeds 0.70 μm, the cupping amount in the reverse direction exceeds 0.5 mm, which causes a practical trouble.

Consequently, it is considered that the preferable thickness of the metal anticorrosive layer Cu90Ni10 is in the range of 0.02 to 0.7 μm in practice.

⟨Experiment 2⟩

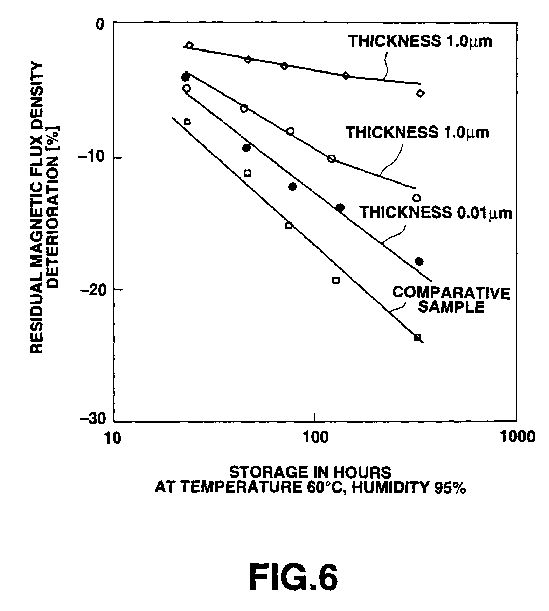

In Experiment 2, the magnetic tape sample and the comparative sample in the state rolled up were stored in a plastic case for Hi8, and the relationship between the storage time and the magnetic characteristic was checked according to the thickness of the metal anticorrosive layer. The check results are shown in Fig. 6.

The storage condition was set to temperature of 60°C, humidity of 95%, an atmosphere containing 0.02 mol of a corrosive gas $SO_2$, and the storage time of 144 hours. The deterioration of the residual magnetic flux density was obtained according to an Equation (1) as follows.

$$\text{Residual magnetic flux density deterioration ratio } \Delta\phi\gamma \ [\%] = (\phi\gamma_1 - \phi\gamma_0) / \phi\gamma_0 \times 100 \tag{1}$$

wherein $\phi\gamma_1$ is initial residual magnetic flux density, and $\phi\gamma_0$ is the residual magnetic flux density after storage.

Fig. 6 shows that the magnetic tape sample has a higher storage characteristic compared to the comparative sample not having the metal anticorrosive layer. This means that by providing a metal anticorrosive layer having a thickness of 0.01 μm or above on the opposite surface of the non-magnetic support member not having the magnetic layer, it is possible to increase the anticorrosive property. Moreover, from the results of Fig. 6, it can be understood that as the thickness of the metal anticorrosive layer increases, the deterioration ratio of the residual magnetic flux density is decreased.

⟨Experiment 3⟩

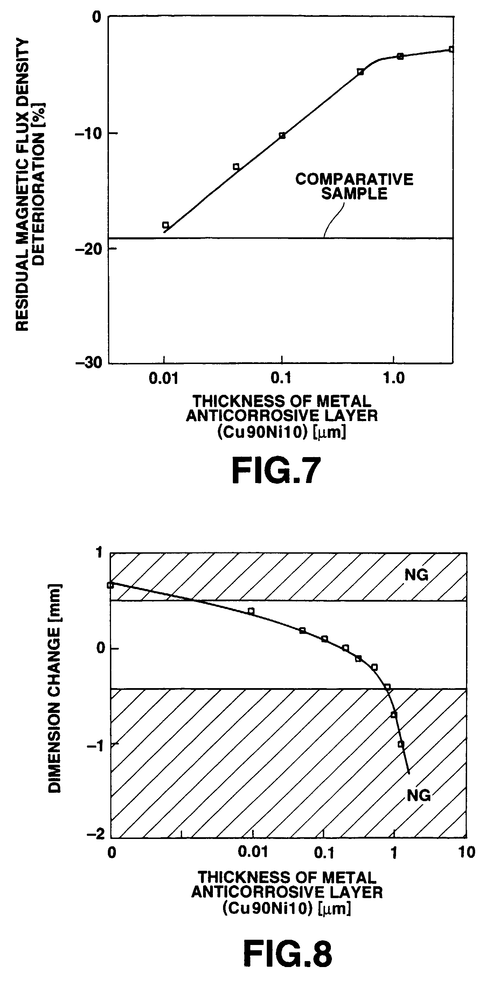

In Experiment 3, the relationship between the thickness of the metal anticorrosive layer and the deterioration ratio of the residual magnetic flux density was checked, so as to determine the effects of the metal anticorrosive layer. The check results are shown in Fig. 7.

Note that in the formation of the metal anticorrosive layer of Cu90Ni10, the beam voltage, current, and the Ar gas concentration are also important parameters but they greatly depend on the apparatus. As the experiment result data, the best data obtained by the apparatus used in this Experiment were used for comparison.

Moreover, the thickness of the metal anticorrosive layer was determined by using a transparent type electronic microscope (TEM) with magnification of 200,000 to obtain photographs.

From the results of Fig. 7, it can be understood that when the metal anticorrosive layer has a thickness of 0.01 μm or above, there is a significant effect in comparison to the comparative sample not having the metal anticorrosive layer.

⟨Experiment 4⟩

In Experiment 4, the relationship between the thickness of the metal anticorrosive layer and the dimension change was checked to determine the effects of the metal anticorrosive layer. The check results are shown in Fig. 8.

As can be seen from the results of Fig. 8, it was confirmed that as the thickness of the metal anticorrosive layer increases, the anticorrosive effect is increased, but the effect increase is not significant after the thickness exceeds 1 μm. If this result is considered in combination with the results of the dimension change shown in Fig. 5, it can be understood that if the thickness exceeds 0.7 μm, the cupping change during the storage is increased and accordingly, the practical range of thickness of the metal anticorrosive layer is from 0.1 to 0.7 μm.

⟨Experiments 5 and 6⟩

In the aforementioned Experiments 4 and 5, The Cu90Ni10 alloy was used for the metal anticorrosive layer, whereas in Experiments 5 and 6, a Cu10Ni90 alloy was used to prepare a magnetic tape sample.

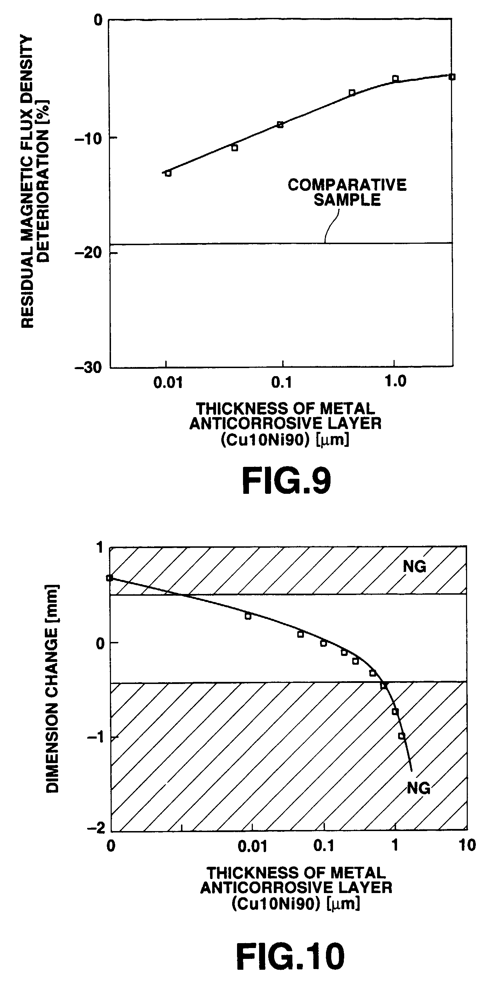

Similarly as in Experiment 3, this magnetic tape sample was used to check the relationship between the thickness of the metal anticorrosive layer and the residual magnetic flux density to determine the thickness condition which exhibits the effect of the metal anticorrosive layer. The check results are shown in Fig. 9. Moreover, similarly as in Experiment 4, the relationship between the thickness of the metal anticorrosive layer and the dimension change was checked. The check results are shown in Fig. 10.

As can be understood from the results of Fig. 9 and Fig. 10, although the composition of the metal anticorrosive layer was different, it was possible to obtain an anticorrosive effect and mechanical characteristic similar to those obtained in Experiments 3 and 4. The practical range of use was also almost identical.

⟨Experiments 7 and 8⟩

In the aforementioned Experiments 1 to 4, the Cu90Ni10 alloy was used for the metal anticorrosive layer, whereas in Experiments 7 and 8, a Cu70Ni30 alloy was used to prepare a magnetic tape sample.

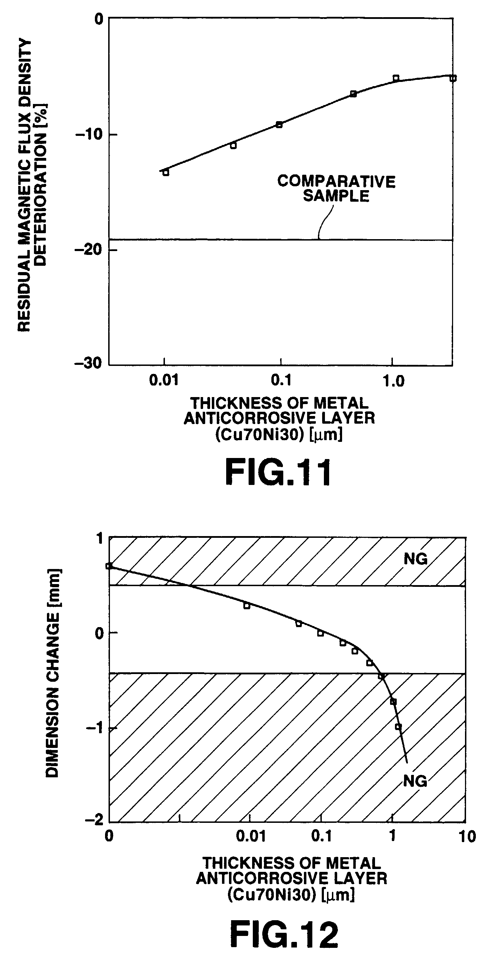

By using this magnetic tape sample, the relationship between the thickness of the metal anticorrosive layer and the deterioration ratio of the residual magnetic flux density was checked similarly as in Experiment 3, so as to determine the thickness condition which exhibits the effect of the metal anticorrosive layer. The check results are shown in Fig. 11. Moreover, similarly as in Experiment 4, the relationship between the metal anticorrosive layer and the dimension change was checked. The check results are shown in Fig. 12.

As can be understood from the results of Fig. 11 and Fig. 12, although the composition of the metal anticorrosive layer was different, it was possible to obtain a similar anticorrosive effect and mechanical characteristic as in Experiments 3 and 4, and the range of the practical use was almost identical.

As has been described above, the results of the Experiments 1 to 8 show that by providing a metal anticorrosive layer having a thickness of 0.01 to 0.7 μm on the opposite surface of the non-magnetic support member not having the magnetic layer, it is possible to suppress deterioration of the magnetic characteristic and minimize the mechanical dimension change even under a severe environment. Moreover, it can be understood that the metal anticorrosive layer is preferably made from a copper-nickel alloy having a barrier effect with a low humidity and gas transparency.

As is clear from the aforementioned, in the magnetic recording medium according to the present invention, a metal anticorrosive layer is formed on a surface of the non-magnetic support member not having the magnetic layer and accordingly, it is possible to minimize the mechanical dimension change caused by a heat history in the production procedure, so as to enhance the mechanical characteristic as well as to improve the storage characteristic under a severe environment.

## Claims

1. A magnetic recording medium comprising a magnetic layer made from a metal magnetic thin film and formed on a surface of a non-magnetic support member,
    wherein a metal anticorrosive layer is formed on the opposite surface of said non-magnetic support member not having said magnetic layer.

2. A magnetic recording medium as claimed in Claim 1, wherein said metal anticorrosive layer is formed so as to have a thickness of 0.01 μm to 0.7 μm.

3. A magnetic recording medium as claimed in Claim 1, wherein said metal anticorrosive layer contains at least one of copper and nickel.

4. A magnetic recording medium as claimed in Claim 1, wherein said metal anticorrosive layer is formed between said non-magnetic support member and a backing layer.

**FIG.1**

# FIG.2

FIG.3

**FIG.4**

STORAGE IN HOURS
AT TEMPERATURE 60°C, HUMIDITY 95%

**FIG.5**

11

**FIG.6**

FIG.7

FIG.8

**FIG.9**

**FIG.10**

**FIG.11**

**FIG.12**